# EUROPÄISCHE PATENTSCHRIFT

(11) **EP 2 781 378 B1**
(45) Veröffentlichungstag und Bekanntmachung des Hinweises auf die Patenterteilung: **08.08.2018**
(21) Anmeldenummer: 14160719.2
(22) Anmeldetag: 19.03.2014
(51) Int. Cl.: B60D 1/24, B60D 1/30, B60D 1/62

(54) **Vorrichtung und Verfahren zur Bestimmung eines Knickwinkels eines Sattelzugs**
Device and method for determining a jackknifing angle of an articulated lorry
Dispositif et procédé de détermination d'un angle d'articulation d'un train routier

(30) Priorität: 19.03.2013 DE 102013102796
(43) Veröffentlichungstag der Anmeldung: 24.09.2014
(73) Patentinhaber: Schmitz Cargobull Gotha GmbH, 99867 Gotha (DE); KNORR-BREMSE Systeme für Nutzfahrzeuge GmbH, 80809 München (DE)
(72) Erfinder: Eberle, Reinhard, 89155 Erbach (DE); Hey, Jeffrey, 99867 Gotha (DE); Flach, Oskar, 35037 Marburg (DE); Mederer, Martin, 92318 Neumarkt-Rittershof (DE); Bühling, Simon, 80796 München (DE); Fry, Matthew, Bristol, Bristol BS48 1PP (GB); Andrews, Tim, Bristol, Bristol BS30 5WB (GB)
(74) Vertreter: Baur & Weber Patentanwälte PartG mbB

(56) Entgegenhaltungen:
- EP-A2- 2 479 086
- DE-A1- 10 333 998
- DE-A1-102004 036 089
- US-A- 5 001 639

## Beschreibung

Die Erfindung betrifft eine Vorrichtung und ein Verfahren zur Bestimmung eines Knickwinkels eines Sattelzugs, insbesondere des Knickwinkels zwischen einem Kippsattelanhänger und einem Zugfahrzeug.

Bei Sattelzügen, wie sie aus dem allgemeinen Stand der Technik bekannt sind, treten bei Durchfahren einer Kurve bzw. beim Rangieren Knickwinkel auf, die durch die drehend gelagerte Verbindung zwischen dem Zugfahrzeug und dem Sattelauflieger hervorgerufen werden. Üblicherweise wird der Sattelauflieger mit dem Zugfahrzeug über eine Sattelaufliegerplatte und einen Königszapfen verbunden. Der Knickwinkel kann entlang dieser Drehachse definiert werden, so dass die Abweichung von Zugfahrzeug und Sattelauflieger von einer longitudinalen Achse angegeben werden können.

Fahrdynamiksysteme, die ein Einknicken des Sattelzuges während der Fahrt verhindern sollen, verwenden zur Messung des Knickwinkels spezielle Sensoren, die sowohl geeignet sind, den aktuellen Knickwinkel als auch die Dynamik in Form einer Winkelgeschwindigkeit zu bestimmen. Ein Beispiel für eine entsprechende Vorrichtung ist in der EP 0 433 891 B1 beschrieben worden.

Bei Langsamfahrten oder beim Rangieren spielt die Fahrdynamikregelung nur eine untergeordnete Rolle, so dass die Überwachung des Knickwinkels üblicherweise der Fahrerin oder dem Fahrer obliegt. Für Lastzüge, die nicht mit einer entsprechenden Sensoreinrichtung bestückt sind, wie sie im Stand der Technik bekannt sind, ist somit keine automatisierte Knickwinkelbestimmung möglich.

In der EP 2 479 086 A2 ist ein Verfahren zur Bestimmung eines Gespannwinkels zwischen Zugfahrzeug und Anhänger beschrieben, bei dem Drehzahlen von Rädern zumindest einer Achse des Anhängers erfasst werden. Die Achse des Anhängers kann dabei starr oder gelenkt sein. Dabei wird zur Bestimmung des Gespannwinkels auch der Winkel eines Radeinschlags an einer gelenkten Achse des Anhängers berücksichtigt, so dass anhand eines Integrationsverfahrens der aktuelle Gespannwinkel aus der zeitlichen Ableitung unter Berücksichtigung des in einem vorherigen Zeitabschnitts berechneten Gespannwinkels berechnet werden kann.

In der US 5 001 639 A ist ein Bremssteuersystem beschrieben, bei dem Raddrehzahlsensoren ausgewertet werden, um im Fahrbetrieb eines Aufliegergespannes Schwingneigung durch gezieltes Bremsen zu reduzieren. Dabei wird neben einer Auswertung der Raddrehzahlsensoren auch direkt auf eine im Bereich eines Königszapfens angeordnete Sensoreinheit zurückgegriffen, die den Knickwinkel zwischen dem Zugfahrzeug und dem Auflieger bestimmt.

In der DE 10 2004 036 089 A1 wird ein Verfahren zum Dämpfen von Gierschwingungen eines Kfz-Anhängers vorgeschlagen. Gierschwingungen werden dabei durch die Überwachung bzw. Auswertung von Raddrehzahlen der Vorderachse des Anhängers erkannt.

In der DE 103 33 998 A1 wird eine Anordnung bestehend aus einem Zugfahrzeug und einem Anhänger beschrieben, bei der ein Winkel zwischen der Deichsel und der Fahrtrichtung des Zugfahrzeugs bestimmt werden soll.

Es besteht daher in der Technik ein Bedarf, eine Alternative zu gängigen Einknickwinkelsensoren anzugeben.

Folglich besteht eine Aufgabe der Erfindung ein Verfahren zur Bestimmung eines Knickwinkels eines Sattelzuges anzugeben, die auf einfache und kostengünstige Weise bei vielerlei Sattelzügen anwendbar sind.

Diese Aufgabe wird durch die Merkmale des unabhängigen Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Die Erfindung macht sich zunutze, dass bei Kurvenfahrten bzw. beim Rangieren, bei dem auch ein Rad still stehen kann, zwischen kurveninnerem und kurvenäußerem Rad unterschiedliche Wegstrecken zurück gelegt werden. Die unterschiedlichen Wegstrecken führen zu unterschiedlichen Drehzahlen des jeweiligen Rades, so dass aus den Drehzahlmessungen ein Knickwinkel zwischen Zugfahrzeug und Sattelauflieger berechnet werden kann. Die ansonsten im Stand der Technik übliche Sensorik, die zwischen dem Zugfahrzeug und dem Sattelauflieger angeordnet ist, kann somit entfallen, bzw. muss nicht ausgewertet werden, was insbesondere in Fahrsituationen, in denen eine Fahrdynamikregelung ohnehin nicht eingesetzt wird, von Vorteil ist. Desweiteren kann die Erfindung auf einfache Weise innerhalb des Sattelaufliegers realisiert werden, so dass kein Datenaustausch zwischen dem Zugfahrzeug und dem Sattelauflieger notwendig ist. Da diese beiden Komponenten eines Sattelzuges üblicherweise von verschiedenen Herstellern gefertigt werden, können somit keine Kompatibilitätsprobleme auftreten und es ist auch möglich, beispielsweise den Sattelauflieger entsprechend nachzurüsten, ohne in die Steuerelektronik des Zugfahrzeugs eingreifen zu müssen.

Gemäß einer Ausführungsform der Erfindung sind die Raddrehzahlsensoren Sensoren eines Antiblockiersystems.

Moderne Sattelzüge werden heutzutage mit Antiblockiersystemen ausgestattet, die aktive Sensoren aufweisen, die die Drehzahl der zu überwachenden Räder kontinuierlich bestimmen. Diese aktiven Sensoren weisen eine hohe Genauigkeit auf, so dass beispielsweise Geschwindigkeiten bis 0,1 km/h detektiert werden können. Folglich ist es möglich, die Sensoren des Antiblockiersystems als Raddrehzahlsensoren zu verwenden, ohne dass dabei Nachrüstkosten entstehen. Es können aber auch eigens für die Bestimmung des Knickwinkels Sensoren bereitgestellt werden oder aber auch Sensoren anderer elektronischer Assistenzsysteme, wie z.B. eines elektronischen Stabilitätsassistenten, verwendet werden.

Gemäß der Erfindung sind weitere Raddrehzahlsensoren vorgesehen, die eine Drehzahlmessung von Rädern einer oder mehreren weiteren Achsen des Sattelaufliegers ermöglichen. Sattelauflieger werden oftmals mit zwei oder drei Achsen versehen. Insbesondere Kippsattelanhänger weisen einen dreiachsigen Aufbau auf. Bei einem zweiachsigen Sattelauflieger ist zu beachten, dass die beiden auf der gleichen Seite des Aufliegers angeordneten Räder bei einer Kurvenfahrt mit einer unterschiedlichen Drehzahl rotieren und Schlupf aufweisen. Die Messungen der Raddrehzahlsensoren können in der Steuereinheit entsprechend korrigiert werden. Bei einem dreiachsigen Aufbau des Sattelaufliegers dreht sich bei einer Kurvenfahrt der Auflieger um die Mittelachse, wobei die davor und die dahinter angeordneten Achsen ebenfalls en Schlupfverhalten zeigen. Somit wird vorteilhafterweise die Mittelachse in der Steuereinheit ausgewertet, wobei eine Korrektur der Messwerte der anderen beiden Achsen ebenfalls möglich ist, sofern diese ausgewertet werden.

In einer weiteren Ausführungsform der Erfindung sind weitere Raddrehzahlsensoren vorgesehen, die eine Drehzahlmessung von Rädern einer Hinterachse und/oder einer Vorderachse des Zugfahrzeugs ermöglichen.

Demgemäß wird die Auswertung der Drehzahl der Räder des Sattelaufliegers auf die Räder der Zugmaschine erweitert, so dass auch eine oder mehrere Achsen des Zugfahrzeugs bezüglich unterschiedlicher Drehzahlen eines kurveninneren und eines kurvenäußeren Rades mit in die Bestimmung des Knickwinkels einbezogen werden. Dies ermöglicht eine genaue Rekonstruktion der Bahntrajektorie, auf der sich das Zugfahrzeug bewegt, so dass eine präzisiere Bestimmung des Knickwinkels des Sattelzuges erreicht wird.

Die oben geschilderten Ausführungsformen umfassen Räder einer oder mehrerer Aufliegerachsen, einer Hinterachse und einer Vorderachse des Zugfahrzeugs. Es ist jedoch ebenso möglich, die Erfindung auf einen Sattelzug zu erweitern, der eine beliebige Anzahl von Achsen aufweist, die auch als Liftachse ausgeführt sein können. Folglich ist die Erweiterung auf unterschiedliche Achsanordnungen möglich, die sowohl einzeln als auch in Kombination zur Auswertung herangezogen werden können.

Gemäß der Erfindung wird ein Verfahren zur Bestimmung eines Knickwinkels eines Sattelzugs angegeben, bei dem folgende Schritte ausgeführt werden:
- Bereitstellen eines ersten Raddrehzahlsensors an einem linken Aufliegerrad einer Aufliegerachse eines Sattelaufliegers,
- Bereitstellen eines zweiten Raddrehzahlsensors an einem rechten Aufliegerrad der Aufliegerachse des Sattelaufliegers,
- Ausgeben von Drehzahlen des linken Aufliegerrades und des rechten Aufliegerrades aus den Raddrehzahlsensoren,
- Verknüpfen der Drehzahlen des ersten Raddrehzahlsensors und des zweiten Raddrehzahlsensors, und
- Ausgeben eines Knickwinkels zwischen einem Zugfahrzeug und dem Sattelauflieger.

Das Verknüpfen der Drehzahlen kann auch in einer Steuereinheit erfolgen, die über einen Datenbus, vorzugsweise einem CAN-Bus, mit den Raddrehzahlsensoren verbunden ist.

Demgemäß wird eine einfache Möglichkeit geschaffen, Informationsaustausch zwischen den Raddrehzahlsensoren und der Steuereinheit zu gewährleisten. Es ist daher nicht nötig, zusätzliche Übertragungsmittel, wie z. B. Datenkabel, zu verlegen, da vorteilhafterweise auf einen bereits existierenden Datenbus zugegriffen werden kann. Gemäß der Erfindung erfolgt eine Berechnung des Knickwinkels erst dann, nachdem ein Knickwinkel berechnet wurde, der einer Geradeausfahrt des Sattelzuges entspricht.

Dies ist insbesondere dann vorteilhaft, wenn das Zugfahrzeug und der Sattelauflieger neu zusammengesetzt werden, wobei dann bereits bei Stillstand des Fahrzeugs ein Knickwinkel vorliegen kann und somit keine definierten Ausgangsbedingungen für das Verfahren gegeben sind. Die Aktivierung der Knickwinkelmessung erst nach einer Geradeausfahrt stellt dann eine definierte Ausgangsbedingung für das Verfahren her.

Der Knickwinkel, der mit dem erfindungsgemäßen Verfahren bestimmt wird, kann auch auf ein Display, an einen Datenbus oder über eine Funkverbindung, vorzugsweise an ein portables Ablesegerät, insbesondere ein Mobiltelefon, übertragen werden.

Bei einer Übertragung an ein Display wird der aktuell bestimmte Knickwinkel der Fahrerin oder dem Fahrer des Sattelzuges mitgeteilt. Sofern der Knickwinkel an einen Datenbus übertragen wird, ist es möglich, die Information bezüglich des Einknickens des Sattelzuges anderen Steuereinheiten zur Verfügung zu stellen. Insofern eine Funkverbindung zusammen mit einem portablen Ablesegerät, wie einem Mobiltelefon, verwendet wird, ist es möglich, die Information nicht nur dem Fahrer oder der Fahrerin sondern auch an ein Datenaufzeichnungsgerät oder an eine Fernüberwachungseinheit weiterzugeben. Somit wird eine Information bezüglich des während der Fahrt eintretenden Knickwinkels dokumentiert oder kann von extern überwacht werden.

Das beschriebene Verfahren sowie die vorteilhaften Ausgestaltungen können in einer Steuereinheit eines Kippsattelanhängers oder einer Steuereinheit eines Fahrzeugs mit Kippsattelanhänger vorgesehen sein. Dazu wird ein Mikroprozessor oder dergleichen mit einem entsprechenden Programm geladen. Das Programm kann derart beschaffen sein, dass es die hier beschriebenen Verfahren verkörpert bzw. auszuführen imstande ist, sodass der Mikroprozessor die Schritte solcher Verfahren ausführen kann und damit über die Steuereinheit die beschriebene Sensoreinheit des Kippfahrzeugs auslesen und den Kippwinkel ausgeben kann.

Desweiteren wird ein Kippsattelanhänger beschrieben, der eine oben angegebene Vorrichtung aufweist.

Nachfolgend werden einige Ausführungsbeispiele anhand der Zeichnung näher erläutert. Es zeigen:
- Fig. 1: eine erfindungsgemäße Vorrichtung in einem Sattelzug in einer Draufsicht, und
- Fig. 2: Schritte eines erfindungsgemäßen Verfahrens in einem Fluß-diagramm.

In den Figuren sind gleiche oder funktional gleich wirkende Bauteile mit den gleichen Bezugszeichen versehen.

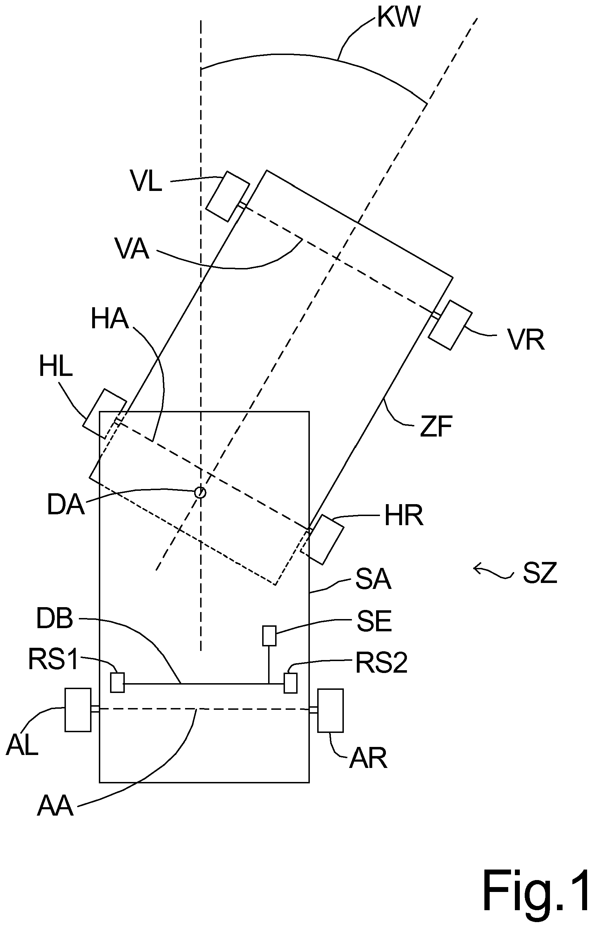

In Fig. 1 ist schematisch in einer Draufsicht ein Sattelzug SZ gezeigt, der von einem Zugfahrzeug ZF und einem Sattelauflieger SA gebildet wird. Das Zugfahrzeug weist eine Vorderachse VA auf, an die ein linkes Vorderrad VL und ein rechtes Vorderrad VR angebracht sind. Desweiteren weist das Zugfahrzeug ZF eine Hinterachse HA auf, die mit einem linken Hinterrad HL und einem rechten Hinterrad HR verbunden ist. Entsprechend ist der Sattelauflieger SA mit einer Aufliegerachse AA versehen, die auf ihrer linken Seite ein linkes Aufliegerrad AL und ein rechtes Aufliegerrad AR aufweist.

Die in Fig. 1 gezeigte Konfiguration mit drei Achsen ist jedoch lediglich beispielhaft zu verstehen. So ist es möglich, sowohl das Zugfahrzeug ZF als auch den Sattelauflieger SA mit zusätzlichen Achsen, beispielsweise einer zweiten Hinterachse oder ein oder zwei zusätzlichen Aufliegerachsen zu versehen. Eine Erweiterung auf Lift-Achsen ist ebenfalls ohne weiteres möglich.

Das Zugfahrzeug ZF und der Sattelauflieger SA sind (nicht in Fig. 1 gezeigt) mittels eines Königszapfens mit einer Aufliegerplatte miteinander verbunden. Diese Verbindungsstelle definiert eine Drehachse, die in Fig. 1 schematisch mit dem Bezugszeichen DA versehen ist. Wenn die Längsachse des Zugfahrzeugs ZF und die Längsachse des Sattelaufliegers SA voneinander abweichen, wird ein Knickwinkel KW definiert, wie in Fig. 1 dargestellt. Der Knickwinkel KW beträgt 0°, solange der Sattelzug gerade ausfährt. Wenn nun eine Kurve durchfahren wird, indem der Sattelzug SZ die Räder der lenkbaren Achse entsprechend einschlägt, weicht der Knickwinkel von 0° ab, wobei das kurveninnere Rad eine geringere Wegstrecke entlang einer Dreiecktorie durchfährt als das kurvenäußere Rad.

Da die Geschwindigkeit des Sattelzuges SZ für beide Räder gleich ist, unterscheiden sich das kurveninnere und das kurvenäußere Rad entsprechend in ihrer Drehzahl. Um diese Drehzahl bestimmen zu können, sind Raddrehzahlsensoren vorgesehen, die jedem Rad zugeordnet sind. So weist das linke Aufliegerrad AL den Raddrehzahlsensor RS1 und das rechte Aufliegerrad AR den Raddrehzahlsensor RS2 auf. Die Raddrehzahlsensoren RS1 und RS2 sind mit einer Steuereinheit SE verbunden. Vorteilhafterweise werden die Raddrehzahlsensoren RS1 und RS2 als Sensoren eines Antiblockiersystems bereit gestellt.

Zur Bestimmung des Knickwinkels KW des Sattelzugs SZ werden nun die Signale der Raddrehzahlsensoren RS1 und RS2 ausgewertet, wobei auf den unterschiedlichen Drehzahlen das Einknicken des Sattelzugs SZ berechnet werden kann. Moderne Sensoren eines Antiblockiersystems können Geschwindigkeiten beispielsweise bis 0,1 km/h detektieren, so dass die Rekonstruktion der Dreijektorie des Sattelaufliegers SA und des Zugfahrzeugs ZF mit hoher Präzision durchführbar ist.

In einer weiteren Ausführungsform sind weitere Raddrehzahlsensoren vorgesehen, die eine Drehzahlmessung von Rädern einer oder mehreren weiteren Achsen (nicht in Fig. 1 gezeigt) des Sattelaufliegers SA ermöglichen. Sattelauflieger SA werden oftmals mit zwei oder drei Achsen versehen. Insbesondere Kippsattelanhänger weisen häufig einen dreiachsigen Aufbau auf. Bei einem zweiachsigen Sattelauflieger SA ist zu beachten, dass die beiden auf der gleichen Seite des Aufliegers SA angeordneten Räder bei einer Kurvenfahrt mit einer unterschiedlichen Drehzahl rotieren und Schlupf aufweisen. Die Messungen der Raddrehzahlsensoren können in der Steuereinheit SE entsprechend korrigiert werden. Bei einem dreiachsigen Aufbau des Sattelaufliegers SA ist die Drehachse sich bei einer Kurvenfahrt die Mittelachse des Aufliegers SA. Die davor und die dahinter angeordneten Achsen zeigen ein Schlupfverhalten. Somit wird vorteilhafterweise die Mittelachse in der Steuereinheit SE ausgewertet, wobei eine Korrektur der Messwerte der anderen beiden Achsen ebenfalls in der Steuereinheit SE möglich ist.

In einer weiteren Ausführungsform der Erfindung sind weitere Raddrehzahlsensoren vorgesehen, die eine Drehzahlmessung von den Rädern der Hinterachse HA und/oder der Vorderachse VA des Zugfahrzeugs ermöglichen. Dabei wird eine präzisiere Bestimmung des Knickwinkels KW des Sattelzuges SZ erreicht.

Folglich wird eine Vorrichtung geschaffen, die es auf einfache Weise, insbesondere ohne zusätzliche Komponenten einzubauen, ermöglicht, den Knickwinkel KW im Sattelzug SZ zu bestimmen.

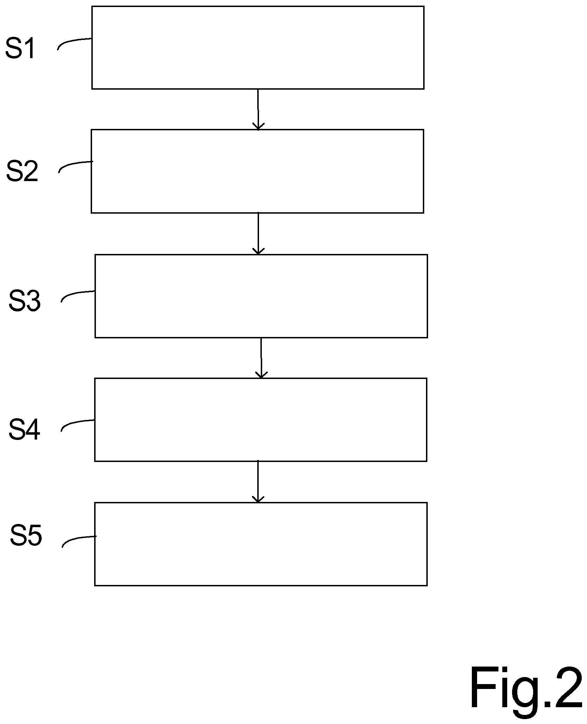

Dazu können auch entsprechende Verfahrensschritte ausgeführt werden, die nachfolgend unter Bezugnahme auf Fig. 2 ausgeführt werden.

In Schritt S1 erfolgt das Bereitstellen des ersten Raddrehzahlsensors RS1 an dem linken Aufliegerrad AL der Aufliegerachse AA des Sattelaufliegers. In Schritt S2 wird der zweite Raddrehzahlsensor RS2 an dem rechten Aufliegerrad AR der Aufliegerachse AA des Sattelaufliegers SA bereit gestellt. In Schritt S3 erfolgt das Ausgeben von Drehzahlen des linken Aufliegerrades AL und des rechten Aufliegerrades AR aus den Raddrehzahlsensoren RS1 und RS2. In Schritt S4 werden die Drehzahlen des Raddrehzahlsensors RS1 und des zweiten Raddrehzahlsensors RS2 verknüpft. In Schritt S5 wird der Knickwinkel KW zwischen dem Zugfahrzeug ZF und dem Sattelauflieger SA ausgegeben.

Die Steuereinheit SE kann dabei über einen Datenbus, beispielsweise einem CAN-Bus mit den entsprechenden Raddrehzahlsensoren RS1 bis RS6 verbunden sein.

Die Berechnung des Knickwinkels KW wird in einer Ausführung des Verfahrens erst dann gestartet, nachdem ein Knickwinkel KW berechnet wurde, der einer Geradeausfahrt des Sattelzuges SZ entspricht. Die Aktivierung der Knickwinkelmessung erst nach einer Geradeausfahrt stellt dann eine definierte Ausgangsbedingung für das Verfahren her.

Die mit dem Verfahren gemäß Fig. 2 ausgegebene Werte des Knickwinkels KW können auf einem Display, über den o. g. Datenbus DB oder über eine Funkverbindung weiter gegeben werden. Die Funkverbindung kann dabei auch entsprechend eines Mobilfunkstandards gewählt werden, so dass der Knickwinkel an ein Mobiltelefon übertragen werden kann. So ist es möglich, dass die Fahrerin oder der Fahrer des Sattelzugs SZ über ein Mobiltelefon eine entsprechende Information abrufen kann.

Desweiteren kann der aktuelle Wert des Knickwinkels auch an eine Fernüberwachungseinheit, die ebenfalls über eine Schnittstelle gemäß dem Mobilfunkstandard verfügt, übertragen werden, so dass zur Protokollierung oder zur Überwachung des Zugfahrzeugs ZF der Knickwinkel abgespeichert werden kann. Die oben beschriebene Vorrichtung bzw. das Verfahren wurden am Beispiel dreier Achsen erläutert. Zur Ausführung des Berechnens des Knickwinkels KW reicht jedoch bereits die die Auswertung von nur einer Achse des Sattelaufliegers aus.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Verfahren zur Bestimmung eines Knickwinkels (KW) eines Sattelzuges (SZ), bei dem folgende Schritte ausgeführt werden:
- Bereitstellen eines ersten Raddrehzahlsensors (RS1) an einem linken Aufliegerrad (AL) einer Aufliegerachse (AA) eines Sattelaufliegers (SA),
- Bereitstellen eines zweiten Raddrehzahlsensors (RS2) an einem rechten Aufliegerrad (AR) der Aufliegerachse (AA) des Sattelaufliegers (SA),
- Ausgeben von Drehzahlen des linken Aufliegerrades (AL) und des rechten Aufliegerrades (AR) aus den Raddrehzahlsensoren (RS1, RS2),
- Verknüpfen der Drehzahlen des ersten Raddrehzahlsensors (RS1) und des zweiten Raddrehzahlsensors (RS2), und
- Ausgeben eines Knickwinkels (KW) zwischen einem Zugfahrzeug (ZF) und dem Sattelauflieger (SA), wobei weitere Raddrehzahlsensoren bereit gestellt werden, die zur Drehzahlmessung eines rechten Vorderrades (VR) und eines linken Vorderrades (VL) einer Vorderachse (VA) des Zugfahrzeugs (ZF) und/oder zur Drehzahlmessung eines linken Hinterrades (HL) und eines rechten Hinterrades (HR) einer Hinterachse (HA) des Zugfahrzeugs (ZF) herangezogen werden, wobei eine Berechnung des Knickwinkels (KW) erst dann erfolgt, nachdem ein Knickwinkel (KW) berechnet wurde, der einer Geradeausfahrt des Sattelzuges (SZ) entspricht.

2. Verfahren nach Anspruch 1, bei dem weitere Raddrehzahlsensoren vorgesehen sind, die eine Drehzahlmessung von Rädern weiterer Achsen des Sattelaufliegers (SA) ermöglichen.

3. Verfahren nach einem der Ansprüche 1 bis 2, bei der die Raddrehzahlsensoren (RS1, RS2) als Sensoren eines Antiblockiersystems bereitgestellt werden.

4. Verfahren nach einem der Ansprüche 1 bis 3, bei dem das Verknüpfen der Drehzahlen in einer Steuereinheit (SE) erfolgt, die über einen Datenbus (DB), vorzugsweise einem CAN-Bus, mit den Raddrehzahlsensoren (RS1, RS2) verbunden ist.

5. Verfahren nach einem der Ansprüche 1 bis 4, bei dem der Knickwinkel (KW) auf einem Display angezeigt wird, an einen Datenbus (DB) übertragen wird oder über eine Funkverbindung, vorzugsweise an ein portables Ablesegerät, insbesondere ein Mobiltelefon, übermittelt wird.

6. Steuereinheit eines Kippsattelanhängers oder eines Fahrzeugs mit Kippsattelanhänger, die geeignet ist, ein Verfahren nach einem der Ansprüche 1 bis 5 auszuführen.

7. Computerlesbares Medium, auf dem Befehle abgespeichert sind, die es einem oder mehreren Rechnern ermöglichen, ein Verfahren nach einem der Ansprüche 1 bis 5 auszuführen.

## Claims

1. Method for determining a jack-knifing angle (KW) of an articulated lorry (SZ), in which the following steps are carried out:
- providing a first wheel speed sensor (RS1) on a left-hand trailer wheel (AL) of a trailer axle (AA) of an articulated trailer (SA),
- providing a second wheel speed sensor (RS2) on a right-hand trailer wheel (AR) of the trailer axle (AA) of the articulated trailer (SA),
- outputting speeds of the left-hand trailer wheel (AL) and of the right-hand trailer wheel (AR) from the wheel speed sensors (RS1, RS2),
- linking the speeds from the first wheel speed sensor (RS1) and from the second wheel speed sensor (RS2), and
- outputting a jack-knifing angle (KW) between a towing vehicle (ZF) and the articulated trailer (SA), wherein further wheel speed sensors are provided and are used to measure the speed of a right-hand front wheel (VR) and of a left-hand front wheel (VL) of a front axle (VA) of the towing vehicle (ZF) and/or to measure the speed of a left-hand rear wheel (HL) and of a right-hand rear wheel (HR) of a rear axle (HA) of the towing vehicle (ZF), wherein the jack-knifing angle (KW) is calculated only after a jack-knifing angle (KW) corresponding to a situation in which the articulated lorry (SZ) is driving straight ahead has been calculated.

2. Method according to Claim 1, in which further wheel speed sensors are provided and make it possible to measure the speed of wheels of further axles of the articulated trailer (SA).

3. Method according to one of Claims 1 to 2, in which the wheel speed sensors (RS1, RS2) are provided as sensors of an anti-lock braking system.

4. Method according to one of Claims 1 to 3, in which the speeds are linked in a control unit (SE) which is connected to the wheel speed sensors (RS1, RS2) via a data bus (DB), preferably a CAN bus.

5. Method according to one of Claims 1 to 4, in which the jack-knifing angle (KW) is displayed on a display, is transmitted to a data bus (DB) or is preferably transmitted to a portable readout device, in particular a mobile telephone, via a radio connection.

6. Control unit of a tipping articulated trailer or of a vehicle having a tipping articulated trailer, which is suitable for carrying out a method according to one of Claims 1 to 5.

7. Computer-readable medium which stores instructions which make it possible for one or more computers to carry out a method according to one of Claims 1 to 5.

## Revendications

1. Procédé de détermination d'un angle de cassure (KW) d'un train routier articulé (SZ), avec lequel les étapes suivantes sont exécutées :
- fourniture d'un premier capteur de vitesse de rotation de roue (RS1) au niveau d'une roue de semi-remorque gauche (AL) d'un essieu de semi-remorque (AA) d'une semi-remorque (SA),
- fourniture d'un deuxième capteur de vitesse de rotation de roue (RS2) au niveau d'une roue de semi-remorque droite (AR) de l'essieu de semi-remorque (AA) de la semi-remorque (SA),
- délivrance de vitesses de rotation de la roue de semi-remorque gauche (AL) et de la roue de semi-remorque droite (AR) depuis les capteurs de vitesse de rotation de roue (RS1, RS2),
- combinaison des vitesses de rotation du premier capteur de vitesse de rotation de roue (RS1) et du deuxième capteur de vitesse de rotation de roue (RS2), et
- délivrance d'un angle de cassure (KW) entre un véhicule tracteur (ZF) et la semi-remorque (SA), des capteurs de vitesse de rotation de roue supplémentaires étant fournis, lesquels sont utilisés pour la mesure de la vitesse de rotation d'une roue avant droite (VR) et d'une roue avant gauche (VL) d'un essieu avant (VA) du véhicule tracteur (ZF) et/ou pour la mesure de la vitesse de rotation d'une roue arrière gauche (HL) et d'une roue arrière droite (HR) d'un essieu arrière (HA) du véhicule tracteur (ZF), un calcul de l'angle de cassure (KW) n'étant effectué qu'après avoir calculé un angle de cassure (KW) qui correspond à un déplacement en ligne droite du train routier articulé (SZ).

2. Procédé selon la revendication 1, avec lequel des capteurs de vitesse de rotation de roue supplémentaires sont présents, lesquels permettent une mesure de la vitesse de rotation des roues d'essieux supplémentaires de la semi-remorque (SA).

3. Procédé selon l'une des revendications 1 et 2, avec lequel les capteurs de vitesse de rotation de roue (RS1, RS2) sont fournis en tant que capteurs d'un système antiblocage.

4. Procédé selon l'une des revendications 1 à 3, avec lequel la combinaison des vitesses de rotation est effectuée dans un module de commande (SE) qui est relié aux capteurs de vitesse de rotation de roue (RS1, RS2) par le biais d'un bus de données (DB), de préférence un bus CAN.

5. Procédé selon l'une des revendications 1 à 4, avec lequel l'angle de cassure (KW) est affiché sur un afficheur, est transmis à un bus de données (DB) ou est communiqué par le biais d'une liaison radioélectrique, de préférence à un appareil de lecture portable, notamment un téléphone mobile.

6. Module de commande d'une semi-remorque articulée ou d'un véhicule avec semi-remorque articulée, lequel est conçu pour mettre en oeuvre un procédé selon l'une des revendications 1 à 5.

7. Support lisible par ordinateur, sur lequel sont enregistrées des instructions qui permettent à un ou plusieurs ordinateurs de mettre en oeuvre un procédé selon l'une des revendications 1 à 5.
